Europäisches Patentamt

European Patent Office

Office européen des brevets

(11) Veröffentlichungsnummer: **0 290 677**
**A1**

## (12) EUROPÄISCHE PATENTANMELDUNG

(21) Anmeldenummer: **87119203.5**

(22) Anmeldetag: **24.12.87**

(51) Int. Cl.⁴ **F16L 59/02 , F16L 59/16**

(30) Priorität: **14.05.87 AT 1217/87**

(43) Veröffentlichungstag der Anmeldung:
**17.11.88 Patentblatt 88/46**

(84) Benannte Vertragsstaaten:
**BE CH DE FR GB IT LI LU NL SE**

(71) Anmelder: **Pecha, Theodor**
**Waldweg 116**
**A-8051 Graz(AT)**

(72) Erfinder: **Pecha, Theodor**
**Waldweg 116**
**A-8051 Graz(AT)**

(54) **Verfahren zur Isolierung von Bauteilen.**

(57) Zur Wärme-, Kälte-und Schallisolierung von einachsig gekrümmte Oberflächen aufweisenden Bauteilen (10) werden zur Bildung einer Isolierkörperschale einzelne Isolierelemente (4) mit trapezförmigem Querschnitt aus einer Dämmstoffplatte geschnitten und auf dem Bauteil (10) nebeneinander aufgebracht. Eine Schutzhülle oder eine Trägerschicht (8) kann zur Verbindung der einzelnen Isolierelement (4) dienen. Aus einer derart verbundenen Anordnung (15) können mit längs bestimmter Kurven (18 und 19) geführter Zuschnitte Elementkombinationen erzeugt werden (20 und 21), mit denen Bauteile, welche mehrachsig gekrümmte Oberflächen aufweisen (26), isoliert werden können. Zum selben Zweck kann die Anordnung (15) rohrförmig eingerollt und daraus keilförmige Segmente herausgeschnitten (23 und 24) werden, die verbleibenden Teile (25) bilden eine segmentförmige Isolierhülle.

Fig. 3

Fig. 9

EP 0 290 677 A1

## Verfahren zur Wärme-, Kälte-und Schallisolierung

Die Erfindung betrifft ein Verfahren zur Wärme-, Kälte-und Schallisolierung von gekrümmte Oberflächen aufweisenden Bauteilen, insbesonders von Rohren und Behältern, mit zu trapezförmigen Elementen zerteilten Platten bzw. Matten, wobei diese Elemente zu einer Isolierkörperschale, welche gegebenenfalls mit einer feuchtigkeitsdichten Metallfolienkapselung versehen ist, zusammengesetzt werden.

Es ist bereits - gemäß DE-OS 3 232 277 - ein Rohrisolierelement bekannt, das aus einer ebenen Plattenform mit einer einseitigen Aluminumbeschichtung gebildet ist. Von der dieser Beschichtung gegenüberliegenden Plattenseite werden in Abständen parallel zueinander angeordnete Keile ausgeschnitten, deren Spitzen bis auf die Rückseite der Alumiumfolie reichen. Durch die Knickung der Aluminiumfolie ist eine Verformung der Platte zu einem polygonen, rohrähnlichen Hohlkörper möglich. Ein derartiges Rohrisolierelement ist relativ aufwendig in der Herstellung und infolge der als Abfall anfallenden Teile auch unwirtschaftlich, überdies ist das angegebene Material sehr engen technischen Anwendungsgrenzen unterworfen.

Weiters ist - gemäß EP-A2 0038063 - eine Wärmedämmkassette zur Wärmedämmung von gekrümmte Oberflächen aufweisenden Bauteilen bekannt. Die Herstellung derselben erfolgt dadurch, daß Dämmplatten aus Preßstoff auf der Basis von Kieselsäure, Verstärkungsfasern und Trübungsmittel in im Querschnitt trapezförmige Elemente zerteilt werden. Die einzelnen Elemente werden bereits bei der Herstellung zu Halbschalen mit etwa polygonförmigem Querschnitt verklebt, die aus Gründen der hohen Hygroskopie und der geringen mechanischen Festigkeit mit wasserdampfdicht verlöteten Metallkassetten umgeben werden müssen. Die Wirtschaftlichkeit auch dieses Verfahrens leidet überdies u.a. auch unter dem relativ hohen Gewicht und unter der leichten Verletzbarkeit bei Transport und Montage.

Schließlich ist noch - gemäß GB-OS 2 159 912 - eine aus keilförmigen Elementen gebildete Anordnung bekannt, welche u.a. auch zur Isolierung von Rohren Verwendung finden kann. Diese Elemente sind aus extrudierten Hohlprofilen aus thermoplastischem Kunststoff gebildet, welcher seinerseits einen relativ engen technischen Anwendungsbereich aufweist. Überdies weist eine derartige Anordnung infolge der entstehenden Luftkonvektion keine besonders gute Wärmedämmung auf, ist aufwendig in der Herstellung und eigentlich eher als - isolierendes - Tragelement gedacht.

Die Aufgabe der Erfindung liegt nun in der Schaffung eines geeigneten Verfahrens zur Wärme-, Kälte-und Schallisolierung von gekrümmte Oberflächen aufweisenden Bauteilen, das bei geringem technischen und wirtschaftlichen Aufwand relativ einfach herstellbar ist.

Diese Aufgabe wird erfindungsgemäß dadurch gelöst, daß zur Bildung eine Isolierkörperschale einzelne Isolierelemente, welche aus platten-oder bahnförmigem Vormaterial einfach und abfallos herstellbar sind, auf den zu isolierenden Bauteil nebeneinander ausgebracht und z.B. durch Klebung oder Spannbänder befestigt werden und daß nach der Aufbringung die Isolierelemente gegebenenfalls zusätzlich mit einer Schutzhülle bzw. Ummantelung versehen werden. Ein derartiges Verfahren eignet sich besonders für mineralische Faserstoffe - wobei jedoch prinzipiell jeder flächig erzeugbare Dämmstoff Verwendung finden kann -, da diese nunmehr durch die Aneinanderreihung am Bauteil keiner Stauchung bzw. Dehnung unterworfen werden, wie dies bei der üblicherweise bisher durchgeführten Biegung eines plattenförmigen (Faser-) Dämmstoffes die Folge ist. Durch die erfindungsgemäßen Verfahrensschritte ist demnach sichergestellt, daß die Homogenität des Faserstoffes über die gesamte Dicke der Isolierschicht gleich bleibt.

Bisher wurden nämlich bei der Montage biegsame Isolierstoffe, insbesondere mineralische Faserstoffe, welche als Wirrvliese mit unidirektionaler (parallel zur Längsausdehnung) Faserrichtung, üblicherweise in Dicken von 20 bis zu etwa 120 mm in Form von Bahnen, Platten oder auch als einseitig auf ein Trägermaterial befestigte Matten erzeugt werden, entsprechend dem zu erwartenden Außenumfang zugeschnitten und um den zu dämmenden Köper gewickelt. Bei dieser Anordnung konnte bisher eine, durch die relativ hohe Dicke bedingte, nicht unerhebliche, von der neutralen Mittelzone nach innen zunehmende Stauchung und Kompression bzw. nach außen zunehmende Dehnung und damit in beiden Fällen Veränderung der - optimalen - Dichte, auf die auch alle wärmetechnischen Berechnungen abgestellt sind, nicht vermieden werden. Die Inhomogenität der Dichte kann dadurch zuverlässig vermieden werden, daß gemäß der Erfindung die Isolierelemente an ihrer Basisseite breiter sind als an ihrer gegenüberliegenden Seite, wobei Isolierelemente mit trapezförmigem, dreieckigem oder dachförmigem Querschnitt zur Anwendung gelangen. Die zunächst vorhandene, je nach Anzahl der Einzelteile mehr oder weniger leicht polygone Form der Konturen, läßt sich infolge der, den meisten Dämmaterialien eigentümlichen leichten Verformbarkeit bei der Applikation entweder durch Spannen eines gegebenenfalls vorhandenen Trägermaterials, jedenfalls aber unter dem radialen Druck des fast immer vorgesehenen Verkleidungsmantels (Blech, Folien etc.) unschwer in eine nahezu ideale Kreisringform überführen.

Gegebenenfalls kann es sich als vorteilhaft erweisen, wenn die Isolierelemente mit einer oder mehreren Dichtlippen versehen sind, welche sich beim Schließen der Zwischenräume bei der Applikation aneinanderlegen und dadurch, auch bei nicht ganz exakter Abstimmung der Anordnung auf den Wölbungsradius des zu dämmenden Bauteiles, trotzdem Wärme-, Kälte-oder Schallbrücken vermieden und, in Grenzen, Durchmesserunterschiede des Bauteiles, was vielleicht fallweise auch aus Gründen vereinfachter Lagerhaltung gewünscht werden kann, ausgeglichen werden.

Durch den Einsatz von mineralischen Faserstoffen steht ein außerordentlich kostengünstiges Ausgangsmaterial zur Verfügung, welches neben einer Reihe von technischen Vorteilen lediglich einen Nachteil, nämlich seine relativ geringe Druckfestigkeit - in der Ausgangsform - aufweist. Diesem Nachteil wird erfidnungsgemäß dadurch begegnet, daß die Faserrichtung in den Elementen entweder "liegend" oder gegebenenfalls "stehend" (tangential oder radial, bezogen auf die Längsachse des zu isolierenden Bauteiles) angeordnet werden kann. Bei "stehender" (radialer) Anordnung weisen Faserstoffe eine wesentlich höhere Druckfestigkeit auf und dies kann gegebenenfalls über die gesamte Isolierfläche, oder aber auch zur Ausbildung von in Abständen angeordneten Stütz-oder Tragelementen ausgenützt werden.

Die solcher Art erzeugten Einzelteile können nun lose nebeneinandergereiht oder vorerst auf ein Trägermaterial (z.B. Glasvlies) nebeneinander befestigt (z.B. durch Klebung) als Matte oder aber bereits am vorgesehenen Mantelmaterial appliziert und so mehr oder weniger montagefertig konfektioniert, zur Weiterverwendung gelangen.

Zur Isolierung von mehrachsig gekrümmten Objekten, insbesonders Rohrbögen und Behälterböden ist es jedoch notwendig, den beschriebenen Elementen eine spezielle Form zu verleihen, welche geeignet ist, sich derartigen Flächen anzupassen. Dies erfolgt, basierend auf den an sich bekannten Regeln zur Ausführung von z.B. (Isolier-) Spenglerarbeiten, durch Zuschnitt der erwähnten streifenförmigen Elemente, entweder einzeln oder zweckmäßigerweise in auf einem Trägermaterial nebeneinander befestigter Anordnung, längs bestimmter Kurven, wobei die Schnittfläche gegebenenfalls in einem bestimmten Winkel gegenüber der Grundfläche geneigt wird. Durch sinnvolles Anordnen der Zuschnitte kann entstehender Abfall außerordentlich gering gehalten werden. Mit den nun entstehenden etwa pyramidenstumpfförmigen Elementen bzw. deren Kombinationen können, bei richtiger Wahl der Zuschnittskurven in bereits montagefertig richtiger Anordnung Objekte mit praktisch jeder vorkommenden Konturform, ohne jegliche zeitraubende Anpaßarbeiten an der Einbaustelle, isoliert werden, wobei alle bereits früher erwähnten Vorteile des Verfahrens voll erhalten bleiben.

Die so hergestellten pyramidenstumpfförmigen Teile und auch die gegebenenfalls anfallenden Abfallteile könen außerdem als Füll-oder Distanzköper z.B. bei doppelschaligen Trennwänden oder Türen Verwendung finden oder aber in offener Anordnung, einseitig auf Platten befestigt, als Schallschluckelemente.

Eine weitere Möglichkeit der Vorbereitung zu einer Dämmelementkombination für einen Rohrbogen ist beispielsweise darin gegeben, die beschriebenen streifenförmigen Einzelelemente, zweckmäßigerweise auf einem Trägermaterial nebeneinander befestigt, vorerst zu einem rohrförmigen Körper zu formen. Aus diesem werden durch in einem bestimmten Winkel gegen die Rohrachse geneigte Schnitte keilförmige Sektoren herausgetrennt. In der Ebene des Bogenradius abgeknickt, entsteht aus der (verbleibenden) Anordnung nunmehr eine nahezu vollkommen an die Bogenform angepaßte und homogene Isolierschicht.Durch Auseinanderrücken der Schnittflächen kann auch hier eine abfallose Herstellung vorgenommen werden.

Im folgenden wird die Erfindung an Hand von in Zeichnungen dargestellten Ausführungsbeispielen näher beschrieben. Es zeigen:

Fig. 1 den Verlauf der Trennschnitte bei der Herstellung von Isolierelementen.

Fig. 2 einige mögliche Formen von Isolierelementen.

Fig. 3 das Anbringen eines aus einzelnen Isolierelementen auf einem Trägermaterial zusammengesetzten Elementes auf einem zu isolierenden Bauteil.

Fig.4 das Aufbringen einer Ummantelung über einer vorerst aus einzelnen Isolierelementen auf einem Bauteil aufgebrachten Dämmschicht.

Fig. 5 den Verlauf der Trennschnitte bei der Herstellung von Isolierelementkombinationen zur Isolierung mehrachsig gewölbter Flächen.

Fig. 6 und Fig. 7 einige mögliche Formen von Isolierelementkombinationen

Fig. 8 den Verlauf der Trennschnitte zum Herausschneiden von Zylindersegmenten aus einer rohrförmigen Isolierelementkombination

Fig. 9 auf einem Rohrbogen aufgebrachte segmentförmige Isolierelementkombinationen.

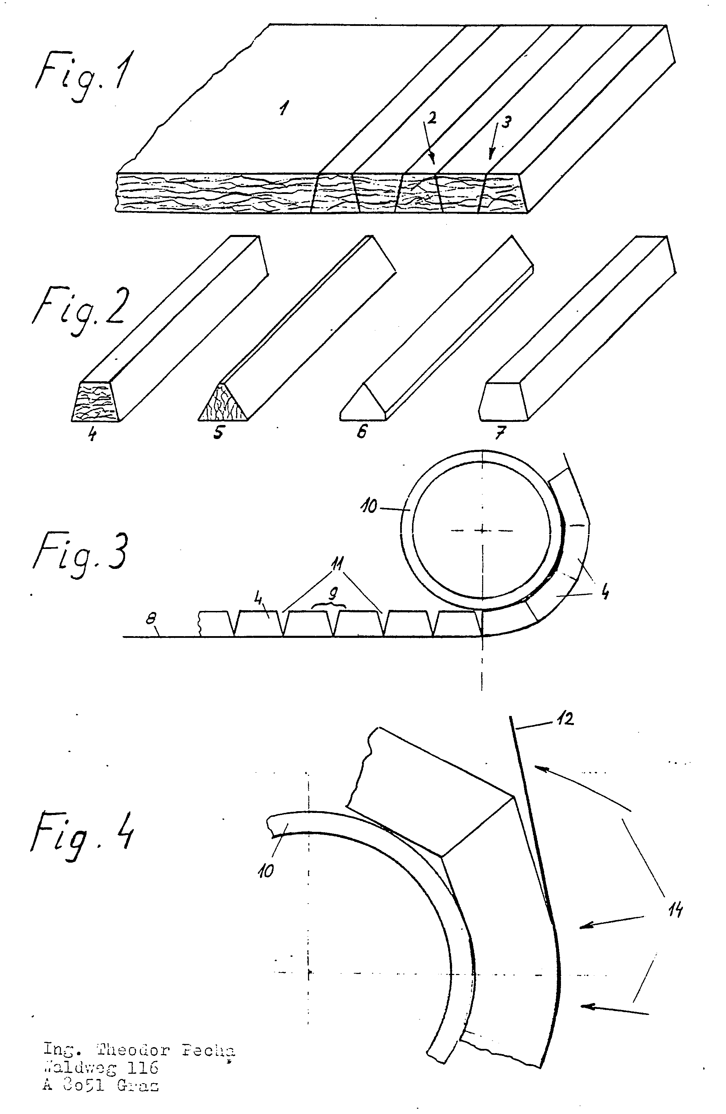

In Fig.1 ist eine Platte aus Dämmstoff 1 mit in Richtung der Längsausdehnung verlaufenden Fasern im Schrägriß dargestellt. Ferner sind Trennschnitte 2 und 3 angedeutet, welche zur Erzeugung von einzelnen Isolierelementen jeweils abwechselnd in 2 bestimmten Winkeln gegen die Fläche der Platte 1 geneigt, ausgeführt werden.

In Fig 2 sind mögliche Ausführungsformen von Isolierelementen im Schrägriß, mit trapezförmigem Querschnitt und "liegender" Faserrichtung 4, mit etwa dreieckigem Querschnitt und· "stehender" Faserrichtung 5 und mit ausgebildeten Dichtlippen ersichtlich, was einen etwa dachförmigen Querschnitt ergibt 6 und 7.

In Fig 3 ist eine durch zueinander parallele Anordnung von einzelnen Isolierelementen 4 auf einem Trägermaterial 8 erzeugte Isolierelementkombination, sowohl im vorerst ebenen Zustand 9, als auch deren Anbringung auf einem zylindrisch gekrümmten Bauteil 10 ersichtlich, wobei sich die vorerst vorhandenen Zwischenräume 11 schließen.

In Fig. 4 sind ausschnittsweise in einem etwas größeren Maßstab vorerst einzeln parallel nebeneinander z.B. durch Kleben auf einem zu isolierenden,gekrümmten Bauteil 10 aufgebrachte Isolierelemente 4 erkennbar. Außerdem ist ein danach aufgebrachter Verkleidungsmantel 12 ersichtlich, dessen radialer, mit dem Bezugszeichen 14 dargestellter Druck die Dämmschicht zu einem nahezu homogenen Hohlzylinder mit annähernd kreisrunder Kontur formt.

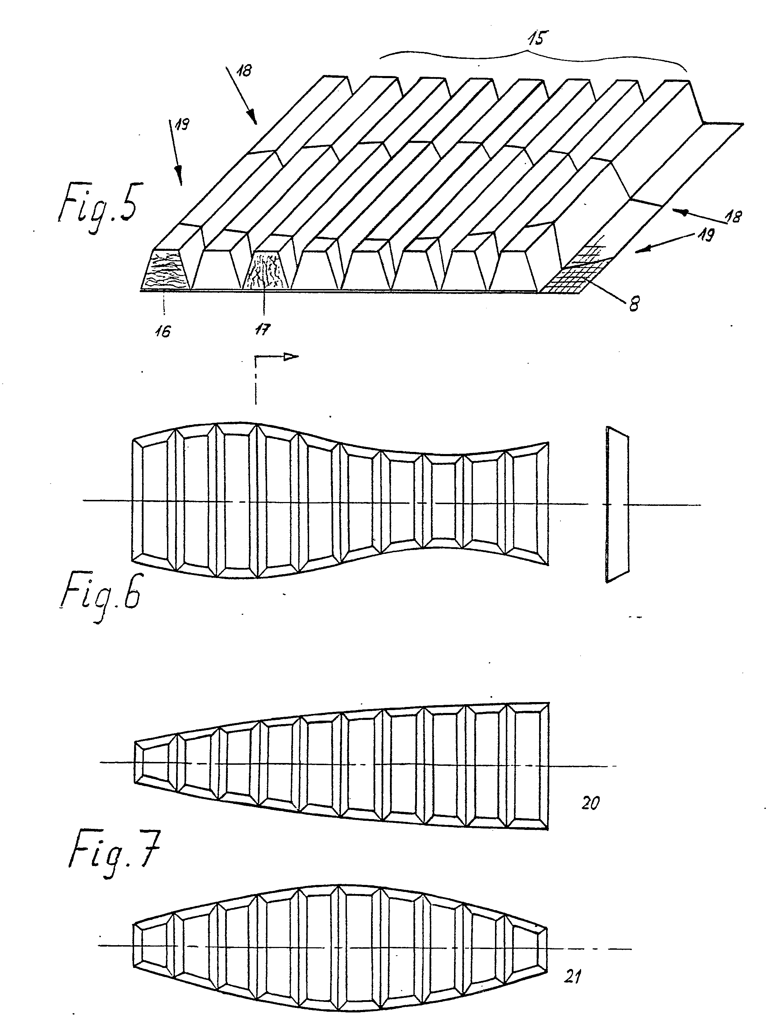

Fig. 5 zeigt eine Anzahl von Isolierelementen mit etwa trapezförmigem Querschnitt, beispielsweise mit "liegender" 16 oder "stehender" 17 Faserrichtung, welche z.B. durch Kleben zueinander parallel nebeneinander auf einem Trägermaterial 8 aufgebracht sind 15. Ferner sind Trannschnitte 18 und 19 angedeutet, welche zur Erzeugung von Elementkombinationen längs bestimmter Kurven und in bestimmten Winkeln gegen die Grundfläche geneigt, ausgeführt werden.

In Fig. 6 ist eine derartige zugeschnittene Elementkombination, welche beispielsweise zur segmentweisen Isolierung eines Rohrbogens bestimmt ist, dargestellt.

Fig. 7 zeigt weitere Möglichkeiten zugeschnittener Elementkombinationen, welche beispielsweise zur segmentweisen Isolierung von gewölbten Flächen (z.B. Behälterböden) 20 oder Kugelflächen 21 geeignet sind.

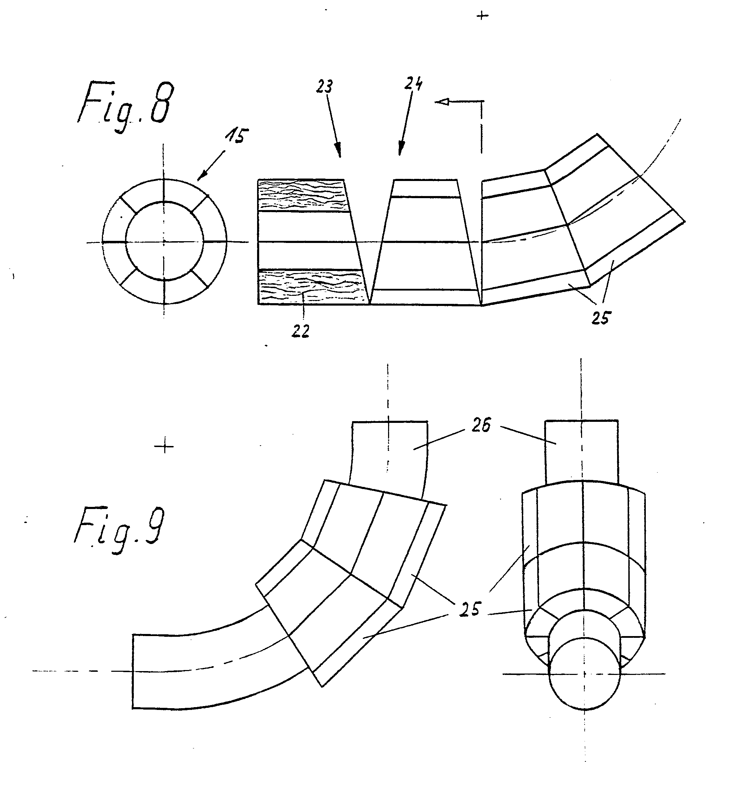

In Fig. 8 ist in Ansicht, teilweise in Schnittdarstellung und Seitenriß ersichtlich, wie aus einer rohrförmig eingerollten Anordnung nebeneinander auf einem Trägermaterial befestigter Isolierelemente 15 bzw. 22 mittels in bestimmten Winkeln gegen die Rohrachse geführten Schnitten 23 und 24 keilförmige Segmente herausgeschnitten werden, so daß zylindersegmentförmige Teile 25 verbleiben.

Fig. 9 zeigt in Ansicht und Seitenriß, wie beispielsweise ein Rohrbogen 26 mittels der zugeschnittenen Teile 25 segmentweise isoliert werden kann.

## Ansprüche

1. Verfahren zur Wärme-, Kälte-und Schallisolierung von gekrümmte Oberflächen aufweisenden Bauteilen mit zu Elementen mit trapezförmigem Querschnitt zerteilten Platten bzw. Matten, wobei diese Elemente zu einer Isolierkörperschale, welche gegebenenfalls mit einer feuchtigkeitsdichten Metallfolienkapselung versehen ist, zusammengesetzt werden, **dadurch gekennzeichnet**, daß zur Bildung der Isolierkörperschalen die einzelnen Isolierelemente auf den zu isolierenden Bauteil nebeneinander aufgebracht und z.B. durch Klebung oder Spannbänder befestigt werden und daß nach der Aufbringung der Isolierelemente am Bauteil diese gegebenenfalls zusätzlich mit einer Schutzhülle bzw. Ummantelung versehen werden.

2. Verfahren nach Anspruch 1, **dadurch gekennzeichnet**, daß zur Isolierung von Bauteilen mit einachsig gekrümmten Oberflächen, insbesonders Rohren und Behältermäntel, Elemente mit allseits jeweils zueinander parallelen Kanten, zur Isolierung von mehrachsig gekrümmten Oberflächen, insbesonders Rohrbögen und Behälterböden, solche Verwendung finden, deren Begrenzungsflächen einerseits nach bestimmten Kurven, andererseits gegebenenfalls auch gegenüber der Grundfläche in bestimmten Winkeln geneigt, hergestellt werden.

3. Verfahren nach Anspruch 1 und 2, **dadurch gekennzeichnet**, daß vorerst die einzelnen Isolierelemente auf einer Schutzhülle bzw. Ummantelung oder ein r Trägerschicht nebeneinander gereiht befestigt werden und daß dann diese so vorbereitete Isoliervorrichtung auf den Bauteil zu seiner Isolierung aufgebracht wird.

4. Wärme-, Kälte-und Schallisolierelemente zur Durchführüng des Verfahrens nach einem der Ansprüche 1, 2 oder 3, welche gegebenenfalls mit einer feuchtigkeitsdichten Metallfolienkapselung versehen sind, **dadurch gekennzeichnet**, daß die Platten bzw. Matten (1) aus mineralischen Faserstoffen bestehen, wobei die aus diesen Platten bzw. Matten zerteilten bzw. herausgeschnittenen Isolierelmente (4 bis 7 und 25) insbesonders tangentiale oder radiale Faserrichtung - bezogen auf die Längsachse des zur isolierenden Bauteiles - aufweisen.

5. Isolierelemente nach Anspruch 4, **dadurch gekennzeichnet**, daß die Isolierelemente (4 bis 7 und 25) an ihrer Basisseite breiter sind als an ihrer gegenüberliegenden Seite, wobei insbesonders Isolierelemente (4 bis 7 und 25) mit trapezförmigem, dreieckigem oder dachförmigem Querschnitt zur Anwendung gelangen.

6. Isolierelemente nach Anspruch 5, **dadurch gekennzeichnet**, daß diese (6 und 7) mit einer oder mehreren Dichtlippen versehen sind.

0 290 677

Fig.1

Fig.2

Fig.3

Fig.4

Ing. Theodor Pecha
Waldweg 116
A 8051 Graz

15

18

19

*Fig.5*

18

19

8

16        17

*Fig.6*

*Fig.7*

20

21

Ing. Theod r Pecha
Waldweg 116
A 8051 Graz

*Fig.8*

23  24

15

22  25

*Fig.9*

26

25

25

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 117 902 (HOLZHEIMER)<br>* Spalte 1, Zeilen 62-70; Figuren * | 1-3 | F 16 L 59/02<br>F 16 L 59/16 |
| A | | 5 | |
| | --- | | |
| X | GB-A- 391 541 (HAMILTON)<br>* Seite 2, Zeile 102 - Seite 3, Zeile 11; Figuren * | 1-3 | |
| A | | 5 | |
| | --- | | |
| X | US-A-3 804 438 (HUMPHRIES)<br>* Figuren 16,17; Zusammenfassung * | 1-3 | |
| A | | 5,6 | |
| | ----- | | |

**RECHERCHIERTE SACHGEBIETE (Int. Cl.4)**

F 16 L

Der vorliegende Recherchenbericht wurde für alle Patentansprüche erstellt

| Recherchenort | Abschlußdatum der Recherche | Prüfer |
|---|---|---|
| DEN HAAG | 28-07-1988 | HUBEAU M.G. |